# EUROPEAN PATENT SPECIFICATION

(11) **EP 0 718 433 B1**
(45) Date of publication and mention of the grant of the patent: **23.01.2002**
(21) Application number: 95308434.0
(22) Date of filing: 24.11.1995
(51) Int. Cl.: D06M 15/65, D06M 13/50, D06N 3/12, C09D 183/04

(54) **Curable coating compositions**
Härtbare Beschichtungszusammensetzungen
Compositions de revêtement durcissables

(30) Priority: 06.12.1994 GB 9424580
(43) Date of publication of application: 26.06.1996
(73) Proprietor: DOW CORNING S.A., B-7180 Seneffe (BE)
(72) Inventor: Peeters, Antoon, B-1500 Halle (BE)
(74) Representative: Bullows, Michael

(56) References cited:
- EP-A- 0 543 401
- EP-A- 0 553 840
- EP-A- 0 681 014
- EP-A- 0 718 433
- US-A- 4 082 726
- US-A- 5 208 097
- US-A- 5 248 715

## Description

This invention is concerned with curable coating compositions which adhere well to a variety of substrates.

Coating compositions are known which cure by a hydrosilylation reaction without producing undesirable byproducts. However, the said coating compositions do not adhere well to certain substrates, for example synthetic textiles, and do not always cure well when applied to certain textile substrates.

Priming a substrate with a primer composition prior to applying a curable coating composition may provide stronger adhesion between a cured coating composition and a substrate. However, this solution suffers from the disadvantage of being an at least two-step process, one step of which involves waiting for the applied primer composition to dry.

Self adhering coating compositions are known which cure by a hydrosilylation reaction. They contain additives which aid adhesion to a variety of substrates, obviating the need for application of a primer composition prior to coating.

One example of a self adhering coating composition is described in US 4,087,585 wherein there is described a coating composition curable by a hydrosilylation reaction which comprises an adhesion promoting additive consisting essentially of a polyorganosiloxane containing a silicon-bonded hydroxyl group, a silicon-bonded vinyl group and an epoxy silane.

US 4,082,726 discloses a curable composition consisting essentially of a mixture of (A) an organopolysiloxane containing at least two lower alkenyl groups bonded to silicon atoms which are in the same molecule, (B) an organopolysiloxane containing at least two hydrogen atoms bonded to silicon atoms which are in the same molecule, wherein the total number of lower alkenyl groups and hydrogen atoms bonded to silicon in the mixture is at least 5, (C) a catalyst and a fourth component (D) namely an organosilicon compound having at least one Q(R"O)₂Si- group and at least one lower alkenyl group or hydrogen atom bonded to silicon atoms which are in the same molecule, wherein Q is a monovalent hydrocarbon radical containing at least one epoxy group and R" is a lower alkyl group.

It is an important criterion in the industrial manufacture of coated substrates, for example textiles, that the coating process and the cure of the composition to provide an elastomeric coating adherent to the substrate are achieved as rapidly as possible to meet ever increasing demands on manufacturing output. There is a need therefore to provide a curable coating composition which may be coated easily onto a suitable substrate and which is able to cure rapidly and achieve good adhesion to a suitable substrate to which it is coated without adversely affecting the physical properties of the cured material.

Prior to this invention, compositions of the type curable by hydrosilylation have shown various excellent properties but we have found, in particular, that adhesion to polyester fabrics has been inadequate to satisfy the more stringent abrasion tests.

We have now found that we can provide a curable coating composition which may easily be coated onto a suitable textile substrate and cure thereon with concomitant rapid onset of adhesion to provide an elastomeric coating with improved adhesion properties.

The invention provides a method of coating a textile as defined in claim 1.

Furthermore, the invention provides a use of a curable coating composition as defined in claim 7.

A curable coating composition selected for use in a method according to the invention is possessed of numerous advantages. The coating composition is able to cure and at the same time rapidly develop an adhesive bond, i.e. within 1 to 3 minutes to a variety of textile substrates, in particular certain synthetic textiles, for example polyesters and nylons. Thereafter the cured coating composition exhibits good resistance to abrasion as exemplified by standard scrub tests; the integrity of the adhesive bond to a suitable substrate is not affected after numerous scrub cycles with a 500g weight.

Component (A) is a composition curable by a hydrosilylation reaction. Operative compositions are those well known in the art which comprise an organopolysiloxane having at least two silicon-bonded alkenyl groups per molecule, an organohydrogen siloxane having at least three silicon-bonded hydrogen atoms per molecule and a noble metal catalyst. Organopolysiloxanes having at least two silicon-bonded alkenyl groups per molecule are well known in the art and may vary from viscous materials to freely flowing liquids. Preferred materials have a viscosity of not greater than 100 Pa.s. at 25°C, more preferably 20 to 60 Pa.s. at 25°C. They may be homopolymers, copolymers or mixtures thereof which comprise units of the general formula RₐR'_{b}SiO_{[4-(a+b)]/2} wherein R is a monovalent hydrocarbon group, R' is a monovalent unsaturated hydrocarbon group, a is 0, 1, 2 or 3 and b is 0 or 1 provided that a + b is not greater than 3. The organohydrogensiloxanes of component (A) are curing agents for the hydrosilylation reaction and are well known in the art. They may vary from viscous materials to freely flowing liquids. Preferred materials have a viscosity of not greater than 500 mPa.s at 25°C, more preferably 5 to 55 mPa.s at 25°C. They may be homopolymers, copolymers or mixtures thereof which comprise units of the general formula RₐH_{b}SiO_{[4-(a+b)]/2} wherein R, a and b are as herein above defined.

The component (A) comprises a noble metal catalyst for the reaction of the aforementioned organopolysiloxane and organohydrogensiloxane. The noble metal catalyst may be a rhodium or platinum containing material. Platinum catalysts may take any of the known forms, ranging from platinum deposited onto carriers, for example powdered charcoal, to platinic chloride, salts of platinum, chloroplatinic acids and encapsulated forms thereof. A preferred form of platinum catalyst is chloroplatinic acid either as the commonly obtainable hexahydrate or the anhydrous form. Platinum complexes may also be used, e.g. those prepared from chloroplatinic acid hexahydrate and divinyltetramethyl disiloxane; Proportions of from 0.1 to 0.5 parts by weight of such complex as catalyst per 100 parts by weight of (A) are preferred.

A curable coating composition used in a method according to the invention comprises a platinum catalyst inhibitor (B). Platinum catalyst inhibitors are well known in the art and may include, for example, acetylenic alcohols, dialkylmaleates, primary alcohols or mixtures thereof. A platinum catalyst inhibitor is present in a curable coating composition in a proportion sufficient to ensure that the coating composition cures in not less than 30 seconds at 150°C. If the inhibitor concentration is too low then the coating composition may fail to adhere to a substrate and if too high the composition may fail to cure quickly enough.

The applicant believes, but does not wish to be bound by this, that paucity of inhibitor leads to the coating composition curing so rapidly that the adhesion promoter is effectively trapped in the cured coating composition before sufficient quantities of the adhesion promoter can reach the coating-substrate interface. ,

The adhesion promoting additive (C) is made by use of an epoxy-substituted alkoxysilane and an alkenyl functional silanol terminated organopolysiloxane. The epoxy substituted alkoxysilanes are well known in the art and numerous silanes of this type are described, for example, in US patent 3,455,877. The alkoxy radicals of this silane may be the same or different and are usually selected from alkoxy radicals having from 1 to 4 carbon atoms, for example, methoxy or ethoxy. Preferred epoxy-substituted alkoxysilanes have an organic substituent bearing the epoxy group. The nature of this organic substituent may vary widely. Suitable materials include, for example, 3-glycidoxypropyltrimethoxysilane, and beta- (3,4-epoxy-cyclohexyl)ethyltrimethoxysilane. The alkenyl-functional silanol-terminated organopolysiloxane employed to make the additive (C) may comprise units according to the general formula R²_{c}R'SiO_{(3-c)/2} and R²_{d}SiO_{(4-d)/2} wherein R² denotes an alkyl or aryl group having from 1 to 8 carbon atoms, R' is a monovalent unsaturated hydrocarbon group as aforementioned, c is 1 or 2 and d is 1, 2 or 3. Preferably, the material is according to the formula H-(OSiR²₂)ₙ(OSiR²R')ₘ-OH wherein n is from 0 to 6, more preferably 2 to 5 and m is from 1 to 6, more preferably 1 to 3. The most preferred material has from 10 % to 15% by weight of silicon-bonded alkenyl groups, e.g., vinyl groups, per molecule. The most preferred material (iii) has a relatively low alkenyl content and will not significantly inhibit the hydrosilylation reaction.

The adhesion promoting additive (C) may be present in a curable coating composition for use in a method according to the invention in an amount which is 0.1% to 3% by weight of the total weight of the curable coating composition. These materials are more fully described in US 4,082,726.

The effect of the adhesion promoting additive (C) of the composition used in a method according to the invention is enhanced by the metal chelate compound. Any metal chelate would be suitable which is compatible with the composition and which does not interfere with the hydrosilylation reaction of reagents of component (A). Suitable metal chelates include acetyl acetonates e.g. triacetyl-acetonates of aluminium, tetra acetylacetonates of zirconium and triacetylacetonates of iron. Aluminium chelates are preferred, for example aluminium may be chelated with 1,3-diketones, e.g., acetylacetonate or hydroxycarboxylic acids, e.g., tartaric acid; the preferred aluminium chelate is, however, aluminium acetyl-acetonate. Aluminium chelates act, in conjunction with the epoxy compounds present, to enhance and increase the rate reaction of the adhesion promoting epoxy compounds of a composition according to the invention to a suitable substrate. The aluminium chelate may be present in a composition according to the invention in proportions of 0.01 to about 5 parts by weight, preferably about 0.1 to 0.3 part by weight per 100 parts of the composition. Higher levels of aluminium chelate impair flame resistance of the compositions and are less preferred.

A composition used in a method according to the invention preferably also comprises a silicone resin e.g. an MQ resin, i.e. a resin consisting of monovalent siloxane units M and quadrivalent siloxane units Q and is preferably a resin consisting essentially of M units R'R₂SiO₁/₂ and R₃SiO₁/₂ and Q units SiO4/₂ in which R and R' are as aforesaid. Preferably R' is a vinyl group, there being no more than 10% by weight of vinyl groups per molecule more pre-ferably 1 to 5% by weight of vinyl groups per molecule. The resin may be in solid or liquid form although we prefer the ratio of the units M to the units Q to be such that the resin is a solid at ambient temperature and pressure.

The silicone resin may be present in the curable coating composition as the sole reinforcing agent. The resin is chosen for its strongly reinforcing properties and the physical properties of the cured material resultant therefrom, but equally as important, the resin provides reinforcement without thickening the curable coating composition to the point where the viscosity becomes so great that it no longer has utility as a coating composition. It is a feature of this invention that the curable coating composition cannot tolerate reinforcing fillers, for example fumed or precipitated silicas of surface areas above 100m²/g which have the effect of dramatically increasing the viscosity of the coating composition of this invention.

A composition used in a method according to the invention may also comprise an organotitanium compound having organic groups attached to titanium through a titanium-oxygen-carbon linkage. The two main types of compound falling within this definition are the ortho-esters, that is the alcoholates and the acylates in which the organic group is derived from a carboxylic acid. The organotitanium catalyst may also contain both types of the aforementioned groups attached to the same titanium atom. Operative organotitanium catalysts thus include those of the formula Ti(OR")4 wherein R" is alkyl, alkoxyalkyl or acyl, for example tetraisopropyl titanate, tetrameth-oxyethoxytitanate and di-isopropyl diacetoxytitanate. The preferred organotitanium catalysts for use in this invention are the chelated or partially chelated titanium compounds. These materials are produced, for example by reacting an alcoholate as referred to above with an α- or β-diketone or a derivative thereof.

The presence of an organotitanium compound in a composition used in a method according to the invention promotes the rapid onset of adhesion of the curable coating composition to suitable substrates; in addition, the ability to promote rapid onset of adhesion does not deteriorate over time. The preferred organotitanium compounds may be employed in an adhesion promoting additive in a proportion of from 0.1 to 1.0 part by weight and preferably 0.2 to 0.6 part by weight per 100 parts by weight of the total composition.

Other adjuvants may be added to compositions of this invention, for example, extending fillers, e.g. ground quartz, metal carbonates, pigments, catalyst inhibitors, heat stabilisers and bath-life extenders.

A curable coating composition for use in a method according to the invention may be provided in one part although it is preferred to provide a composition according to the invention in two or more parts, most preferably two parts. A two-part composition may then be mixed prior to use. It is important to store the components in a two or more parts composition in the correct fashion. They may be formulated in a number of ways provided that the organohydrogensiloxane and the noble metal catalyst of the component (A) are stored separately. A preferred method of storing a two part composition comprises storing in one part of the composition an alkenyl polyorganosiloxane, a noble metal catalyst, and optionally an extending filler and in a second part the organohydrogensiloxane of component (A) and the epoxy-functional materials with inhibitor (B). The two parts combine the reactants in a way which permits mixing the two parts in a 10 to 1 weight ratio. Curable coating compositions when mixed may have a viscosity appropriate to application machinery and textiles to be coated, generally in the range 20 Poise to 2000 Poise (2 to 200 Pa.s). Preferred materials have a viscosity in the range 200 to 1200 Poise (20 to 120 Pa.s) at 25°C and cure within 1 to 4 minutes at a temperature from 150°C to 180°C to provide elastomeric materials. Preferred compositions according to the invention typically remain at workable viscosities for at least 24 hours when stored at temperatures up to 40°C.

A method according to this invention is useful for coating textiles and is particularly suitable for coating synthetic textiles, for example polyester and nylon woven fabrics.

In a method according to the invention the coating composition may be coated onto suitable substrates by those coating techniques common to the art, for example, gravure, blade coating, knife on air, knife on roller and screen printing. Curing of the composition may be brought about by heating, e.g. in an oven, the coating to a temperature in the range 160 to 175°C for a period of few minutes (for example for 3 to 4 minutes at 170°C).

There now follows a description of an example which serves to illustrate the invention. All parts and percentages are by weight unless otherwise stated.

Two-part curable coating compositions were formed according to the following procedure.

### Curable Coating Composition C - Comparative Example

Part A of a curable coating composition (C) was formed by mixing 45 parts of a vinyl end-blocked polydimethylsiloxane having a viscosity of 55 Pa.s. at 25°C and a vinyl content of 0.08%, 17 parts of a vinylated hydrophobic polysilicate resin, 0.1 part of a platinum complex catalyst containing 0.63% w/w platinum, 31 parts of ground quartz plus 5 parts of calcium carbonate and 0.3 part of isopropyl titanate.

Part B of a curable coating composition C was formed by mixing 55 parts of a vinyl end-blocked polydimethylsiloxane having a viscosity of 0.45 Pa.s. at 25°C, 40 parts of a crosslinker comprising an organohydrogensiloxane having at least three silicon-bonded hydrogen atoms per molecule and a viscosity of 32 mPas at 25°C, 0.4 part of ethynylcyclohexanol as an inhibitor and 4 parts of α glycidoxypropyl trimethoxysilane.

Part A and Part B were mixed in a 10:1 weight ratio to form the curable coating composition C. This composition contains no adhesion promoting additive and serves as a comparative composition. It was applied to a blue dyed polyester fabric by a knife on air coater and heated to 150°C. Cure of the composition was inhibited and a sticky mass formed. Also, adhesion of the composition C to the fabric was insufficient to withstand a 1000 scrub test (500g).

### Example According to The Invention

A part A1 was prepared by adding to 100 parts of Part A 0.3 part of the platinum complex catalyst, 0.45 part of the vinyl end-blocked polydimethylsiloxane having a viscosity of 55 Pa.s at 25°C, 0.17 part of the polysilicate resin, 0.3 part of aluminium acetonyl acetonate and 1 part of the reaction product obtained by heating at 150°C in presence of KOH of 1 part of a glycidoxypropyl trimethoxy silane and 1 part of a hydroxyterminated methylvinyl polysiloxane having viscosity of from about 28 to about 35 cSt.

Part A1 and Part B were mixed in a 10:1 weight ratio to provide an illustrative curable coating composition. The composition, when mixed, had a viscosity of 50 Pa.s. It was applied to the blue dyed polyester fabric used in Example 1 by a knife on air coater to form a coating on the fabric and was heated to 170° for 3 to 4 minutes; this coating procedure was repeated to apply two further layers of coating over the first, giving a final coating weight of 110 grams per square metre. Upon cooling, it was found that the coating was a non-tacky fully cured coating strongly adherent to the fabric. The coated fabric was subjected to a standard scrub test with 500g weight and withstood more than 1000 cycles.

## Claims

1. A method of coating a textile which comprises applying thereto a curable coating composition comprising (A) a composition curable by a hydrosilylation reaction, said composition including a noble metal catalyst for the hydrosilylation reaction, (B) a platinum catalyst inhibutor present in an amount sufficient to ensure that the coating composition cures in not less than 30 seconds at 150°C and (C) an adhesion promoting additive and curing the composition at a temperature of from 150°C to 180°C, wherein the adhesion promoting additive (C) is a reaction product of an epoxy-substituted alkoxysilane and an alkenyl-functional silanol-terminated organopolysiloxane and the coating composition additionally contains (D) a metal chelate compound.

2. A method according to Claim 1 **characterised in that** the alkenyl-functional silanol-terminated organopolysiloxane is according to the formula H-(OSiR₂)ₙ(OSiRR')ₘ-OH wherein R is an alkyl or aryl group having from 1 to 8 carbon atoms, R' is an alkenyl group having up to 8 carbon atoms, n is from 1 to 6 and m is from 1 to 6.

3. A method according to Claim 1 or Claim 2 **characterised in that** the metal chelate compound is aluminium acetonyl acetonate.

4. A method according to any of Claims 1 to 3
**characterised in that** the coating composition also comprises an unreacted epoxy substituted alkoxysilane.

5. A method according to any of Claims 1 to 4
**characterised in that** the coating composition also comprises a titanium compound.

6. A method according to any of Claims 1 to 5
**characterised in that** the coating composition is cured by heating to a temperature of 160°C to 175 °C for 3 to 4 minutes.

7. Use of a curable coating composition comprising (A) a composition curable by a hydrosilylation reaction said composition including a noble metal catalyst for the hydrosilylation reaction, (B) a platinum catalyst inhibutor present in an amount sufficient to ensure that the coating composition cures in not less than 30 seconds at 150°C and (C) an adhesion promoting additive which is a reaction product of an epoxy-substituted alkoxysilane and an alkenyl-functional silanol-terminated organopolysiloxane, and (D) a metal chelate compound, as a coating for a synthetic textile which is to be cured at a temperature of from 150°C to 180°C.

## Patentansprüche

1. Verfahren zur Beschichtung eines Textils, umfassend Darauf-Auftragen einer härtbaren Beschichtungszusammensetzung, enthaltend (A) eine Zusammensetzung, die durch eine Hydrosilylierungsreaktion härtbar ist, wobei diese Zusammensetzung einen Edelmetallkatalysator für die Hydrosilylierungsreaktion enthält, (B) einen Platinkatalysator-Inhibitor, der in einer Menge vorliegt, die ausreicht um sicherzustellen, dass die Beschichtungszusammensetzung in nicht weniger als 30 Sekunden bei 150°C härtet, und (C) einen Haftvermittlungszusatz, und Härten der Zusammensetzung bei einer Temperatur von 150-180°C, wobei der Haftvermittlungszusatz (C) ein Reaktionsprodukt eines epoxysubstituierten Alkoxysilans und eines alkenyl funktionellen Organopolysiloxans mit Silanol-Endgruppen ist und die Beschichtungszusammensetzung zusätzlich (D) eine Metallchelatverbindung enthält.

2. Verfahren gemäß Anspruch 1, **dadurch gekennzeichnet, dass** das alkenylfunktionelle Organopolysiloxan mit Silanol-Endgruppen der Formel H-(OSiR₂)ₙ(OSiRR')ₘ-OH entspricht, worin R eine Alkyl- oder Arylgruppe mit 1 bis 8 Kohlenstoffatomen ist, R' eine Alkenylgruppe mit bis zu 8 Kohlenstoffatomen ist, n von 1 bis 6 reicht und m von 1 bis 6 reicht.

3. Verfahren nach Anspruch 1 oder 2, **dadurch gekennzeichnet, dass** die Metallchelatverbindung Aluminiumacetonylacetonat ist.

4. Verfahren nach einem der Ansprüche 1 bis 3, **dadurch gekennzeichnet, dass** die Beschichtungszusammensetzung weiterhin nicht umgesetztes epoxysubstituiertes Alkoxysilan enthält.

5. Verfahren nach einem der Ansprüche 1 bis 4, **dadurch gekennzeichnet, dass** die Beschichtungszusammensetzung weiterhin eine Titanverbindung enthält.

6. Verfahren nach einem der Ansprüche 1 bis 5, **dadurch gekennzeichnet, dass** die Beschichtungszusammensetzung durch Erwärmen auf eine Temperatur von 160-175°C für 3 bis 4 Minuten gehärtet wird.

7. Verwendung einer härtbaren Beschichtungszusammensetzung, enthaltend (A) eine Zusammensetzung, die durch eine Hydrosilylierungsreaktion härtbar ist, wobei diese Zusammensetzung einen Edelmetallkatalysator für die Hydrosilylierungsreaktion enthält, (B) einen Platinkatalysator-Inhibitor, der in einer Menge vorliegt, die ausreicht um sicherzustellen, dass die Beschichtungszusammensetzung in nicht weniger als 30 Sekunden bei 150°C härtet, und (C) einen Haftvermittlungszusatz, der ein Reaktionsprodukt aus einem epoxysubstituierten Alkoxysilan und einem alkenylfunktionellen Organopolysiloxan mit Silanol-Endgruppen ist, und (D) eine Metallchelatverbindung, als Beschichtung für ein synthetisches Textil, die bei einer Temperatur von 150-180°C zu härten ist.

## Revendications

1. Un procédé d'enduction d'un textile qui comprend l'application à celui-ci une composition d'enduction durcissable comprenant (A) une composition durcissable par une réaction d'hydrosilylation, ladite composition comprenant un catalyseur au métal noble pour la réaction d'hydrosilylation, (B) un inhibiteur de catalyseur au platine présent en une quantité suffisante pour assurer que la composition d'enduction durcisse en non moins de 30 secondes à 150°C et (C) un additif activateur d'adhérence, et le durcissement de la composition à une température de 150°C à 180°C, dans lequel l'additif activateur d'adhérence (C) est un produit réactionnel d'un alcoxysilane à substitution époxy et d'un organopolysiloxane à fonction alcényle à terminaison silanol et la composition d'enduction contient de plus (D) un chélate métallique.

2. Un procédé selon la revendication 1, **caractérisé en ce que** l'organopolysiloxane à fonction alcényle à terminaison silanol répond à la formule H-(OSiR₂)ₙ(OSiRR')ₘ-OH où R est un groupe alkyle ou aryle ayant 1 à 8 atomes de carbone, R' est un groupe alcényle ayant jusqu'à 8 atomes de carbone, n est de 1 à 6 et m est de 1 à 6.

3. Un procédé selon la revendication 1 ou la revendication 2, **caractérisé en ce que** le chélate métallique est l'acétonylacétonate d'aluminium.

4. Un procédé selon l'une quelconque des revendications 1 à 3, **caractérisé en ce que** la composition d'enduction comprend également un alcoxysilane à substitution époxy n'ayant pas réagi.

5. Un procédé selon l'une quelconque des revendications 1 à 4, **caractérisé en ce que** la composition d'enduction comprend également un composé du titane.

6. Un procédé selon l'une quelconque des revendications 1 à 5, **caractérisé en ce que** la composition d'enduction est durcie par chauffage à une température de 160°C à 175°C pendant 3 à 4 minutes.

7. Utilisation d'une composition d'enduction durcissable comprenant (A) une composition durcissable par une réaction d'hydrosilylation, ladite composition comprenant un catalyseur au métal noble pour la réaction d'hydrosilylation, (B) un inhibiteur de catalyseur au platine présent en une quantité suffisante pour assurer que la composition d'enduction durcisse en non moins de 30 secondes à 150°C et (C) un additif activateur d'adhérence qui est un produit réactionnel d'un alcoxysilane à substitution époxy et d'un organopolysiloxane à fonction alcényle à terminaison silanol, et (D) un chélate métallique, comme enduit pour textile synthétique qui doit être durci à une température de 150°C à 180°C.
